# EUROPEAN PATENT APPLICATION

(11) **EP 4 742 402 A1**
(43) Date of publication of application: **13.05.2026**
(21) Application number: 25830917.8
(22) Date of filing: 22.05.2025
(51) Int. Cl.: H01M 50/358, H01M 50/383, H01M 50/317, H01M 50/342, H01M 50/502, H01M 50/249

(54) **BATTERY MODULE, BATTERY PACK AND VEHICLE COMPRISING SAME**

(30) Priority: 17.06.2024 KR 20240078461
(71) Applicant: LG Energy Solution, Ltd., Seoul 07335 (KR)
(72) Inventor: CHANG, Hyuk-Kyun, Daejeon 34122 (KR); KIM, Soo-Youl, Daejeon 34122 (KR); KIM, So-Young, Daejeon 34122 (KR); PARK, Gi-Chan, Daejeon 34122 (KR); PARK, Ju-Hun, Daejeon 34122 (KR)
(74) Representative: BCKIP Part mbB
(86) International application number: PCT/KR2025/006943
(87) International publication number: WO 2025/263857

(57) **Abstract**

A battery module of the present disclosure may include a cell assembly including a plurality of battery cells; and a module case that accommodates the cell assembly and includes a side cover assembly covering one side surface of the cell assembly, wherein the side cover assembly may include a first plate including at least one first venting hole configured to discharge venting gas, and the venting gas may be discharged in a first direction perpendicular to the first plate and may be configured to be bent in a second direction roughly parallel to the first plate and move.

## Description

### TECHNICAL FIELD

The present disclosure relates to a battery module, and a battery pack and a vehicle including the same.

This application is based on and claims priority from Korean Patent Application No. 10-2024-0078461, filed on June 17, 2024, with the Korean Intellectual Property Office, the disclosure of which is incorporated herein in its entirety by reference.

### BACKGROUND ART

Secondary batteries having high applicability according to product groups and electrical characteristics such as high energy density are commonly applied not only to portable devices but also to an electric vehicle (EV) or a hybrid electric vehicle (HEV) driven by electric power sources. Such secondary batteries are attracting attention as a new energy source to improve eco-friendliness and energy efficiency in that they have not only a primary advantage of dramatically reducing the use of fossil fuels, but also no by-products generated from the use of energy.

Secondary batteries widely used at present include lithium-ion batteries, lithium polymer batteries, nickel cadmium batteries, nickel hydrogen batteries, nickel zinc batteries, and the like. When a higher output voltage is required, a plurality of battery cells may be connected in series to form a battery module or a battery pack. Additionally, in order to increase the charging and discharging capacity, a plurality of battery cells may be connected in parallel to form a battery module or a battery pack. Therefore, the number of battery cells included in the battery module or battery pack may be variously set according to the required output voltage or the charging and discharging capacity.

When configuring a battery pack by connecting a plurality of battery cells in series/parallel, it is common to first configure a battery module including at least one battery cell, and then configure a battery pack or a battery rack by adding other components using this at least one battery module. Alternatively, in recent years, a battery pack in the form of cell to pack, in which a plurality of battery cells are directly accommodated in a pack housing or the like without being modularized, has also been manufactured.

However, when multiple battery modules are included inside the battery pack this way, the battery modules may be vulnerable to thermal chain reactions therebetween. For example, when an event such as thermal runaway occurs inside any one battery module, such thermal runaway may be propagated to other battery modules. If the propagation of thermal runaway between battery modules is not properly suppressed, an event occurring in a specific battery module may cause a chain reaction in multiple battery modules, which may lead to major problems such as explosions or fires.

When a venting hole is formed in the case covering the upper direction, during the occurrence of a thermal event in the battery cell, high-temperature gas or flame moving upward may collide with the pack cover covering the upper side and then flow back into the battery module or flow into adjacent battery modules, causing a problem of the propagation and acceleration of thermal runaway. Additionally, discharges moving toward the upper side of the battery module may spread in random directions, increasing the likelihood of heat transfer to adjacent battery modules.

Therefore, even if a thermal event occurs in the battery cell within the battery module, there is a need to develop a structure that may suppress and delay heat propagation in order to prevent gas or flame from being transferred to other cells within the battery module or to adjacent battery modules to cause thermal runaway.

Additionally, when thermal runaway occurs in the battery module, there is a need to develop a structure that may quickly discharge high-temperature gas or flame generated in the battery module to the outside to alleviate heat accumulation within the battery module.

### DISCLOSURE

### Technical Problem

Therefore, the present disclosure is directed to providing a battery module that may quickly discharge high-temperature gas or flame generated in the battery module to the outside when thermal runaway occurs in the battery module, thereby alleviating heat accumulation within the battery module.

The present disclosure is directed to providing a battery module capable of solving the problem that high-temperature gas or flame discharged from the battery cell flow back into the battery module or flow into adjacent battery modules to cause the propagation of thermal runaway when a thermal event occurs in the battery cell.

The present disclosure is also directed to providing a battery pack and a vehicle including such a battery module.

However, technical problems to be solved by the present disclosure are not limited to the above-described problems, and other problems not mentioned herein may be clearly understood by those skilled in the art from the following description of the present disclosure.

### Technical Solution

In order to solve the above problem, a battery module of the present disclosure may include a cell assembly including a plurality of battery cells; and a module case that accommodates the cell assembly and includes a side cover assembly covering one side surface of the cell assembly, wherein the side cover assembly may include a first plate including at least one first venting hole configured to discharge venting gas, and the venting gas may be discharged in a first direction perpendicular to the first plate and may be configured to be bent in a second direction roughly parallel to the first plate and move.

The first plate may further include at least one first protrusion extending in an outward direction from a first surface of the first plate facing the first direction.

The at least one first protrusion may be formed to surround at least a part of the at least one first venting hole, and the at least one first protrusion may include at least one curved surface bent in the second direction.

The at least one first venting hole may be disposed in plurality along the stacking direction of the battery cells.

The curved surface may be configured to discharge the venting gas in the second direction.

The side cover assembly may further include a refractory member disposed on an inner side of the first plate.

The refractory member may include at least one venting portion in which at least a part thereof is formed at a position corresponding to the first venting hole.

The refractory member may be configured such that the at least one venting portion is closed in a normal state, and at least a part of the at least one venting portion is opened when the venting gas is discharged from the battery cell.

The at least one venting portion may have a preliminary fracture part configured to be broken when the venting gas is discharged from the battery cell.

The side cover assembly may further include a second plate that includes at least one second venting hole formed at a position corresponding to the at least one first venting hole and is disposed between the first plate and the cell assembly.

The second plate may further include at least one second protrusion extending in an outward direction from a second surface of the second plate facing the first direction.

The side cover assembly may further include a third plate that is disposed on an outer side of the first plate and includes at least one fourth venting hole formed at a position corresponding to the at least one first venting hole.

The third plate may further include at least one third protrusion extending in an outward direction from a third surface of the third plate facing the first direction.

The battery module may further include a busbar frame disposed between the side cover assembly and the plurality of battery cells.

The busbar frame may include at least one third venting hole formed at a position corresponding to the at least one first venting hole.

Additionally, there may be provided a battery pack including a battery module according to the present disclosure.

And, there may be provided a vehicle including a battery pack according to the present disclosure.

### Advantageous Effects

According to one aspect of the present disclosure, high-temperature gas or flame generated in the battery cell within the battery module may be quickly discharged to the outside by inducing directional venting thereof toward the rear side. As a result, the safety and reliability of the battery module may be ensured.

Additionally, according to another aspect of the present disclosure, after high-temperature gas or flame generated in the battery cell within the battery module is discharged toward the rear, directional venting is induced in a specific direction perpendicular to the rear surface direction, so that the gas or flame rotates along one surface of the battery module and lose energy, thereby effectively preventing or delaying the gas or flame from flowing back into the battery module or being transferred to other battery modules to cause thermal runaway.

Additionally, according to still another aspect of the present disclosure, a venting hole is formed in the rear plate, which relatively reduces the problem of rigidity degradation caused by the venting hole compared to the case where the venting hole is formed in the top plate, thereby maintaining the structural rigidity or performance such as vibration or swelling.

Additionally, according to still another aspect of the present disclosure, it is possible to prevent or delay events, such as fires or explosions, caused by thermal runaway of a battery pack including multiple battery modules or a device equipped with them.

In addition, the present disclosure may have various other effects, which will be described in each embodiment, or descriptions of effects that may be easily inferred by those skilled in the art will be omitted.

### DESCRIPTION OF DRAWINGS

The accompanying drawings illustrate preferred embodiments of the present disclosure and together with the foregoing disclosure, serve to provide further understanding of the technical features of the present disclosure, and thus, the present disclosure is not construed as being limited to the drawing.
FIG. 1 is a rear perspective view of a battery module according to an embodiment of the present disclosure.
FIG. 2 is a front perspective view of a battery module according to an embodiment of the present disclosure.
FIG. 3 is an exploded perspective view of a battery module according to an embodiment of the present disclosure.
FIG. 4 is an enlarged view showing a side cover assembly of a battery module according to an embodiment of the present disclosure.
FIG. 5 is a front view showing a side cover assembly of a battery module according to an embodiment of the present disclosure.
FIG. 6 is a view for describing a venting gas discharge path during a thermal event of a battery module according to an embodiment of the present disclosure.
FIG. 7 is an exploded perspective view showing a side cover assembly of a battery module according to an embodiment of the present disclosure.
FIG. 8 is a cross-sectional view of the side cover assembly of FIG. 7 according to an embodiment of the present disclosure, taken along the X-axis direction.
FIG. 9 is a cross-sectional view of a side cover assembly according to an embodiment of the present disclosure, taken along the X-axis direction.
FIG. 10 is a cross-sectional view of a side cover assembly according to an embodiment of the present disclosure, taken along the X-axis direction.
FIGS. 11a and 11b are views showing a refractory member including at least one venting portion according to an embodiment of the present disclosure.
FIG. 12 is a view showing a refractory member including at least one venting portion according to an embodiment of the present disclosure.
FIG. 13 is a view for describing a venting gas discharge path during a thermal event of a battery module in a battery pack including the battery module according to an embodiment of the present disclosure.
FIG. 14 is a schematic perspective view of a vehicle including a battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the embodiments described in this specification and the configurations shown in the drawings are only some of the most preferred embodiments of the present disclosure, not intended to entirely represent the technical aspects of the present disclosure, so it should be understood that various equivalents and modifications may be made thereto at the time of filing the present application.

Additionally, the present disclosure includes various embodiments. For each embodiment, duplicate descriptions of substantially identical or similar configurations will be omitted, and differences will be mainly described.

Additionally, to help understanding of the present disclosure, the accompanying drawings are not illustrated on an actual scale, but the dimensions of some components may be exaggerated. Additionally, the same reference numeral may be assigned to the same component in different embodiments.

Although the first, second, and the like are used to describe various components, it is obvious that these components are not limited by these terms. These terms are used only to distinguish one component from another component, and unless expressly stated to the contrary, it is obvious that the first component may be the second component.

Throughout the specification, unless expressly stated to the contrary, each component may be singular or plural.

Hereinafter, when any configuration is disposed on the "upper (or lower)" of a component or "top (or bottom)" of a component, it may mean not only that any configuration is disposed in contact with the upper surface (or lower surface) of the component, but also that other configuration may be interposed between the component and any configuration disposed above (or below) the component.

Additionally, when it is described that a component is "connected", "coupled", or "in contact" to another component, the components may be directly connected to or in contact with each other, but it should be understood that other components may be "interposed" between each component, or each component may be "connected", "coupled", or "in contact" through another component.

As used herein, singular expressions include plural expressions unless the context clearly indicates otherwise. In this application, the terms "comprising" or "including" should not be construed as necessarily including all of the various components or various steps described in the specification, but rather should be construed as not including some of the components or some of the steps, or as further including additional components or steps.

Throughout the specification, when referring to "A and/or B", it means A, B or A and B, unless expressly stated to the contrary, and when referring to "C to D", it means C or more and D or less, unless expressly stated to the contrary.

Meanwhile, terms indicating directions such as upper, lower, left, right, front, and back may be used in the present disclosure, but these terms are only for convenience of description, and it is obvious to those skilled in the art that the terms may vary depending on the position of a reference object or an observer.

For example, in the embodiment of the present disclosure, the X-axis direction illustrated in the drawings may mean a width direction or left-right direction, the Y-axis direction may mean a length direction or front-back direction perpendicular to the X-axis direction on the horizontal plane (X-Y plane), and the Z-axis direction may mean an upper-lower direction (vertical direction) perpendicular to both the X-axis direction and the Y-axis direction.

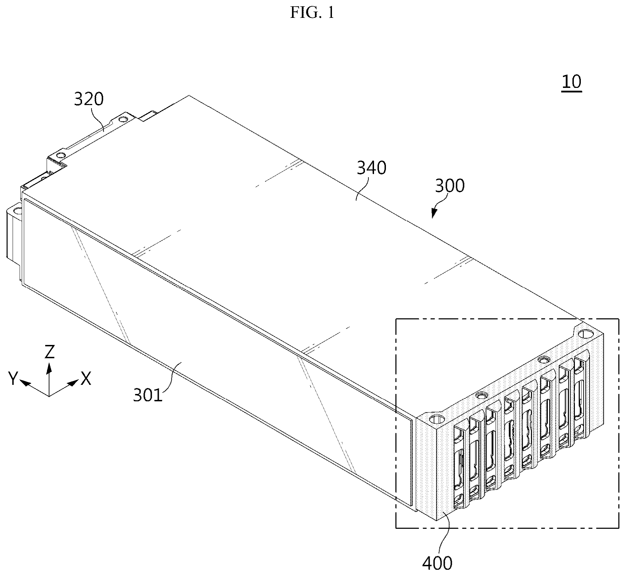

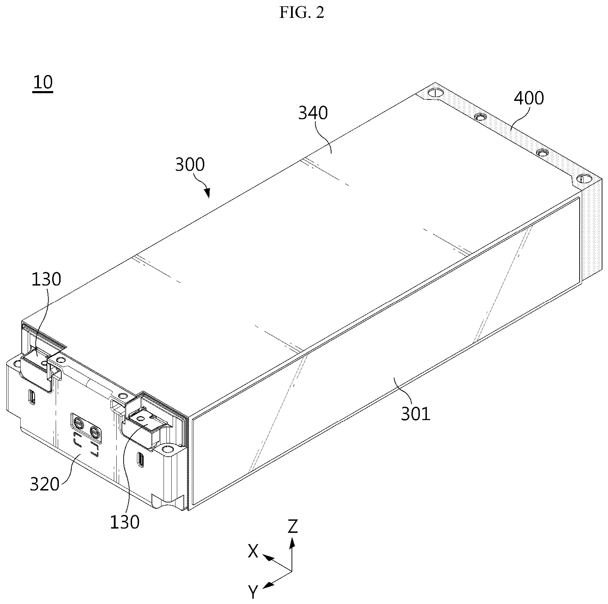

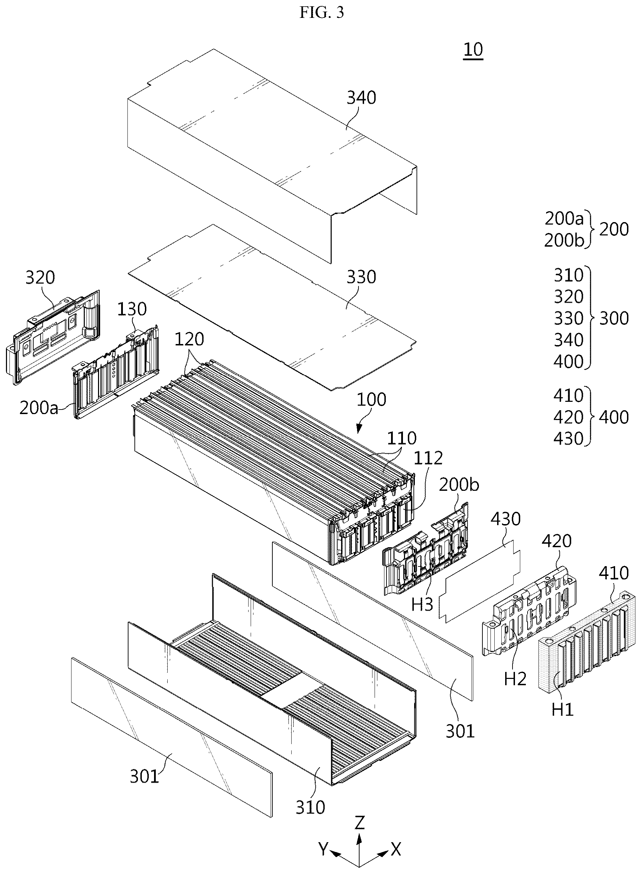

FIG. 1 is a rear perspective view of a battery module 10 according to an embodiment of the present disclosure. FIG. 2 is a front perspective view of a battery module 10 according to an embodiment of the present disclosure. FIG. 3 is an exploded perspective view of a battery module 10 according to an embodiment of the present disclosure.

Referring to FIGS. 1 to 3, a battery module 10 according to an embodiment of the present disclosure may include a cell assembly 100, a module case 300, and a side cover assembly 400.

Referring mainly to FIG. 3, the cell assembly 100 may include a battery cell 110. The battery cell 110 may be provided in plurality. At this time, the plurality of battery cells 110 may be electrically connected to each other.

The plurality of battery cells 110 may be stacked along one direction. For example, as illustrated in FIG. 3, the plurality of battery cells 110 may be disposed in parallel in the left-right direction (X-axis direction) while being erected in a vertical direction (Z-axis direction).

More specifically, the plurality of battery cells 110 may include an electrode assembly and a cell case that accommodates the electrode assembly. The cell case may be, for example, a laminate sheet including a resin layer and a metal layer.

Additionally, the plurality of battery cells 110 may each be provided with an electrode lead 112. The electrode lead 112 is connected to the electrode assembly and may be withdrawn to the outside of the cell case to function as an electrode terminal. The electrode leads 112 may be provided in a pair, and the pair of electrode leads 112 may be withdrawn at both ends of the battery cell 110, that is, in the length direction (Y-axis direction). At this time, the pair of electrode leads 112 may be a positive electrode lead and a negative electrode lead.

Meanwhile, the present disclosure is not limited by the specific type or shape of the battery cell 110 and various battery cells 110 known at the time of filing of the present disclosure may be employed to configure the battery module 10 of the present disclosure. In the present embodiment, a pouch-type secondary battery with high energy density and easy stacking is targeted as shown in the drawings, but it is obvious that a cylindrical or prismatic secondary battery may be applied as the battery cell 110.

Additionally, referring to FIG. 3, the cell assembly 100 of the battery module 10 according to an embodiment of the present disclosure may include a blocking member 120. The blocking member 120 may be configured to be provided between battery cells 110 to partition a plurality of battery cells 110. In particular, at least one blocking member 120 may be included in one battery module 10. The blocking members 120 may be provided in plurality along one direction in which the battery cells 110 are arranged.

The blocking member 120 may be provided in such a manner that it is disposed for at least one battery cell 110. For example, as illustrated in FIG. 3, in the battery module 10 according to an embodiment of the present disclosure, the blocking member 120 may be disposed for every two battery cells 110.

The blocking member 120 may be provided as an insulating pad having a thinner thickness than the battery cell 110. The blocking member 120 may be made of a material having excellent heat resistance and/or fire resistance. Alternatively, the blocking member 120 may be provided in the form of a compressible pad, for example, made of a material such as silicone or aerogel.

According to the above embodiment of the present disclosure, the battery cells 110 may be partitioned or separated to prevent gas or flame from passing to other neighboring blocking members 120 and heat from being transferred to other battery cells 110. Additionally, according to the above embodiment of the present disclosure, the blocking member 120 may contribute to the structural rigidity of the battery cells 110 by compressing the battery cells 110 when swelling occurs in the battery cells 110.

The module terminal 130 may be configured to be electrically connected to a plurality of battery cells 110. The module terminal 130 may include a positive electrode terminal and a negative electrode terminal. Additionally, the module terminal 130 may be configured to be electrically or communicatively connected to a control device such as a BMS.

Referring to FIGS. 1 to 3, the module case 300 may be configured to accommodate the cell assembly 100. Specifically, the module case 300 may be configured to form a receiving space therein and to accommodate the cell assembly 100 in the receiving space. This module case 300 may be made of a metal material having rigidity and heat resistance to physically or chemically protect the accommodated cell assembly 100.

Meanwhile, referring to FIGS. 1 to 3, the module case 300 may include a case body 310, a front plate 320, a top plate 330, a top cover 340, and a side cover assembly (e.g., a rear plate) 400.

Specifically, as illustrated in the drawings of the present disclosure, the case body 310 may be provided as a U-frame. When the case body 310 is provided as a U-frame, it may be provided to cover both side surfaces and the lower surface of the cell assembly 100. The case body 310 may include a left plate and a right plate that cover both side surfaces of the cell assembly 100, and a lower plate covering the lower surface of the cell assembly 100. And, the left plate, the right plate, and the lower plate may be configured in an integrated form. At this time, the upper surface and the front and rear surfaces of the case body 310 may be open.

When the case body 310 is provided as a U-frame, a top plate 330 coupled to the open upper surface of the case body 310 may be further included. The top plate 330 may be coupled to the case body 310 by welding each other. At this time, the coupled shape of the top plate 330 and the case body 310 may be a rectangular tubular shape with the front and rear surfaces open.

The module case 300 may further include a top cover 340 coupled to the upper side of the top plate 330. The top cover 340 of the module case 300 may prevent heat from escaping in an upward direction and induce directional venting toward the rear side. Additionally, it may contribute to the structural rigidity of the battery module 10. For example, the top cover 340 may be provided as a U-frame. For example, the top cover 340 may be provided as a U-frame in an upside-down shape. When the top cover 340 is provided as a U-frame, it may be provided to cover both side surfaces and the upper surface of the cell assembly 100. The top cover 340 may include a left plate and a right plate that cover both side surfaces of the cell assembly 100, and an upper plate covering the upper surface of the cell assembly 100. And, the left plate, the right plate, and the upper plate may be configured in an integrated form. At this time, the lower surface and the front and rear surfaces of the top cover 340 may be open. The top cover 340 may overlappingly cover the upper surface and both side surfaces together with the top plate 330 and the case body 310 to reinforce structural rigidity and indirectly induce directional venting toward the rear side. Additionally, the top cover 340 and/or the top plate 330 may not include vent holes, thereby maintaining structural rigidity. However, the top plate 330 or the top cover 340 may be omitted or modified in form depending on the embodiment, and may be designed and changed in various ways.

In addition, the module case 300 may be formed in various other shapes. For example, the module case 300 may be provided as a mono frame. For example, the case body 310 may be configured in a rectangular tubular shape that has an upper surface, a lower surface, a left surface, and a right surface, and has open front and rear surfaces.

The front plate 320 and the side cover assembly 400 may be provided on the open front and rear surfaces of the case body 310, respectively. For example, the front plate 320 and the side cover assembly 400 may be coupled to the case body 310 by welding. For example, the front plate 320 and the side cover assembly 400 may be connected to the top cover 340 by welding or coupling means such as screws, rivets, or the like. Alternatively, the front plate 320 and the side cover assembly 400 may be integrally formed with the case body 310.

According to an embodiment of the present disclosure, the front plate 320 may be provided with a module terminal 130. The front plate 320 may be partially provided with holes or slits for exposing components that need to be exposed to the outside, such as the module terminal 130 or connector of the battery module 10.

Meanwhile, the front plate 320 and the side cover assembly 400 may, for example, have an inner surface made of an insulating material and an outer surface made of a metal material. The structure and configuration of the side cover assembly 400 will be described in detail below.

Referring mainly to FIG. 3, the battery module 10 may further include a heat insulating member 301 attached to the module case 300. For example, the heat insulating member 301 may be provided as an insulating pad or insulating sheet having a relatively thin thickness. The heat insulating member 301 may be made of a material having not only insulating performance but also excellent heat resistance and/or fire resistance.

The heat insulating member 301 may be attached to both side surfaces of the module case 300. For example, the heat insulating member 301 may be disposed on the left plate and/or the right plate of the case body 310 and/or the top cover 340. The size of the heat insulating member 301 may be relatively smaller than or substantially the same as the size of the left plate and/or the right plate of the case body 310 and/or the top cover 340. The heat insulating member 301 may have a rectangular shape substantially similar to the left plate and/or the right plate of the case body 310 and/or the top cover 340, but the shape of the heat insulating member 301 is not limited by the above embodiment and may be designed and changed in various ways.

The heat insulating member 301 may be attached to both side surfaces of the battery module 10 to prevent heat generation gas or discharges generated in the battery module 10 from being transferred to the adjacent battery module 10. Additionally, the venting gas vented to the rear may affect the adjacent battery module 10 while moving along the side surface of the battery module 10, but the heat transfer may be reduced or prevented by attaching the heat insulating member 301 to both side surfaces of the battery module 10.

Referring further to FIG. 3, the battery module 10 of the present disclosure may further include a busbar frame 200. The busbar frame 200 may be provided inside the module case 300 and configured to cover at least one side of the cell assembly 100.

The busbar frame 200 may be positioned on the side of the battery cell 110 where the electrode lead 112 is provided. For example, as illustrated in FIG. 3, the electrode lead 112 may be positioned at the front and rear sides of the battery cell 110, and the busbar frame 200 may be coupled to the front and rear of the cell assembly 100.

Accordingly, the busbar frame 200 may include a front busbar frame 200a and a rear busbar frame 200b. The busbar frame 200 may be made of a material having electrical insulation, such as a plastic material.

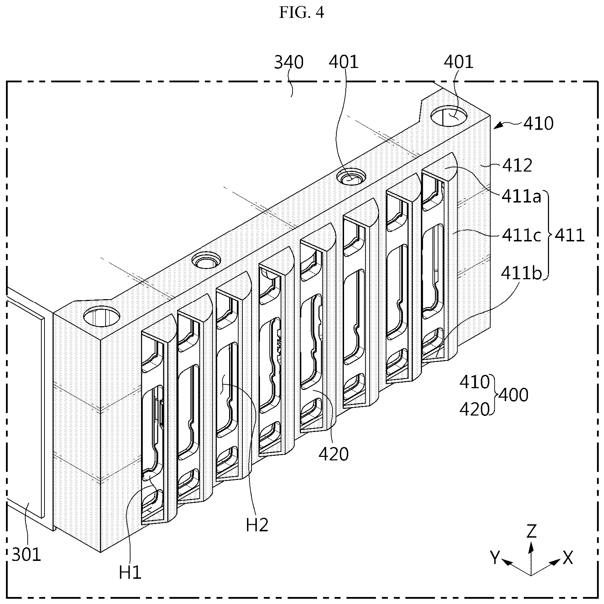

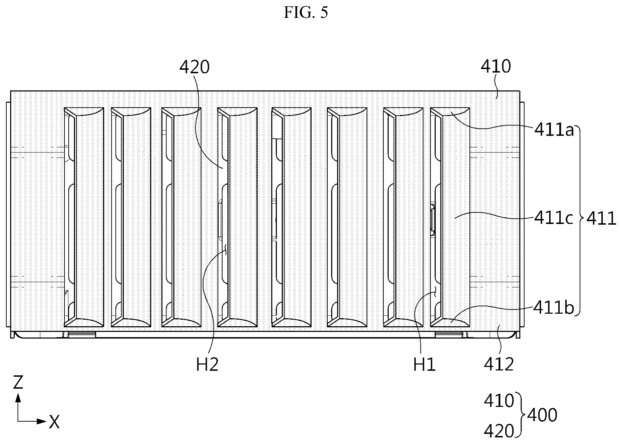

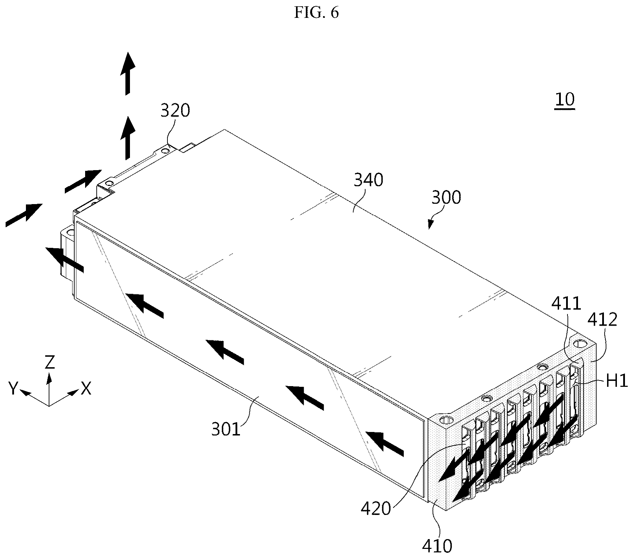

FIG. 4 is an enlarged view showing a side cover assembly 400 of a battery module 10 according to an embodiment of the present disclosure. FIG. 5 is a front view showing a side cover assembly 400 of a battery module 10 according to an embodiment of the present disclosure. FIG. 6 is a view for describing a venting gas discharge path during a thermal event of a battery module 10 according to an embodiment of the present disclosure.

Referring to FIGS. 4 to 6, the battery module 10 may include a cell assembly 100 and a module case 300. The module case 300 may include a side cover assembly 400. The configuration of the side cover assembly 400 of FIGS. 4 to 6 may be the same as all or part of the configuration of the side cover assembly 400 of FIGS. 1 to 3. The embodiment of FIGS. 4 to 6 may be partially combined with the embodiment of FIGS. 1 to 3.

The side cover assembly 400 may cover one side surface of the cell assembly 100. For example, the side cover assembly 400 may be configured to be coupled to the open rear surface of the case body. For example, the side cover assembly 400 may be coupled to the case body 310 and/or the top cover 340 by welding or coupling means such as screws or rivets. For example, the first plate 410 of the side cover assembly 400 to be described later may include at least one first groove portion 401, and may be configured such that a fixing pin, a clip, or the like is inserted into the first groove portion 401 to be coupled to the case body 310 and/or the top cover 340.

According to an embodiment, the side cover assembly 400 may include a first plate 410 (e.g., an end plate) including at least one first venting hole H1 configured to discharge venting gas.

The first plate 410 may be defined as a type of module case 300 exposed to the outside of the battery module 10, and may be configured to surround at least a part of the cell assembly 100. The first plate 410 may include a material having high strength to protect the cell assembly 100. For example, the first plate 410 may include a metal material such as aluminum, an aluminum alloy, or steel.

At least one first venting hole H1 may be configured to allow venting gas generated in the battery cell 110 to be discharged to the outside of the module case 300. As a result, directional venting in one direction may be possible in the battery module 10 according to an embodiment of the present disclosure. According to an embodiment, at least one first venting hole H1 may be configured to allow venting gas to be discharged in the first direction (e.g., -Y-axis direction). For example, directional venting toward the rear of the battery module 10 may be possible through the first venting hole H1.

In this way, at least one first venting hole H1 provided on the rear surface of the module case 300 may be provided to discharge gas or flame generated inside the battery module 10 to the outside of the battery module 10 in the event of thermal runaway of the battery module 10. The remaining portion of the module case 300 except for at least one first venting hole H1 is closed, and gas may be discharged in a straight line toward the at least one first venting hole H1.

According to the above embodiment of the present disclosure, even if a thermal event occurs at any position of the battery cell 110, the gas or flame generated in the battery cell 110 is discharged to the outside of the battery module 10 through the adjacent first venting holes H1 provided at the rear of the battery cell 110, thereby enabling smooth venting.

In this way, by forming at least one first venting hole H1 on the rear surface of the module case 300, the venting gas generated in the battery cell 110 is not discharged in an upward direction, so that the high-temperature gas or flame discharged from the battery cell 110 may be prevented from colliding with the top plate 330 or top cover 340 facing upward and then flowing back into the battery module 10 or flowing into adjacent battery modules 10 to cause the propagation of thermal runaway.

Additionally, by forming at least one first venting hole H1 on the rear surface of the module case 300, the problem of rigidity degradation caused by the venting hole is relatively reduced compared to the case where the venting hole is formed in the top plate 330, so that the structural rigidity or performance such as vibration or swelling of the battery module 10 may be improved or maintained.

At least one first venting hole H1 may be provided in plurality. At least one first venting hole H1 may be disposed in plurality in at least one direction. At least one first venting hole H1 may be disposed along multiple rows. For example, as illustrated in FIG. 4, at least one first venting hole H1 is disposed in a row along the height direction (Z-axis direction) of the first plate 410, and the at least one first venting hole H1 disposed in a row may be disposed in multiple rows along the stacking direction of the battery cell 110, that is, the width direction (X-axis direction) of the first plate 410. The plurality of first venting holes H1 may be disposed to be spaced apart from each other at regular intervals. The plurality of first venting holes H1 may all guide the venting gas to be discharged in the same first direction (-Y-axis direction).

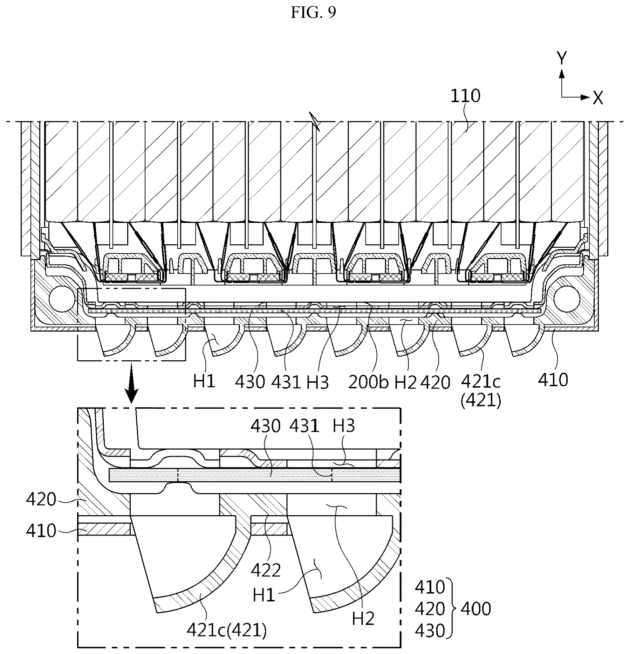

According to an embodiment, the first plate 410 may further include at least one first protrusion 411 that extends outward from the first surface 412 facing the first direction (-Y-axis direction), which is the outer direction of the first plate 410. The number and position of at least one first protrusion 411 may correspond to the number and position of at least one first venting hole H1. For example, at least one first protrusion 411 may be integrally formed with the first plate 410. For example, the first plate 410 may be integrally injection-molded along the shape of the first protrusion 411. The processing of the first plate 410 may be relatively easier than the processing of the second plate 420 according to FIG. 9 to be described later.

According to an embodiment, at least one first protrusion 411 may be formed to surround at least a part of at least one first venting hole H1. According to an embodiment, at least one first protrusion 411 may include a curved surface 411c bent in a second direction roughly perpendicular to the first direction. Specifically, at least one first protrusion 411 may include a first protrusion surface 411a extending in an upper direction of the first venting hole H1, a second protrusion surface 411b extending in a lower direction of the first venting hole H1, and a curved surface 411c that vertically contacts the first protrusion surface 411a and the second protrusion surface 411b and is bent in the second direction. For example, the second direction may be a direction roughly parallel to the first surface 412 of the first plate 410. For example, the second direction may be a left direction (-X-axis direction) or a right direction (+X-axis direction) that is roughly perpendicular to the first direction. For example, referring to FIGS. 4 to 6, the second direction may be roughly the left direction (-X-axis direction).

In this way, the venting gas or the like vented in the first direction (-Y-axis direction) may be configured to be bent in the second direction (e.g., -X-axis direction) and move in the second direction by the first protrusion 411 including the curved surface 411c bent in the second direction. When the discharges, flame, or the like discharged from the battery cell 110 is bent from the first direction to the second direction, it may move in the second direction along the first surface 412 of the first plate 410. Additionally, the venting gas or the like may move curvedly along the side surface of the battery module 10 and then move in the upward direction. For example, referring to FIG. 6, the venting gas or the like discharged from the battery cell 110 may be vented in the first direction (-Y-axis direction), then move in the second direction (-X-axis direction) along the first surface 412 of the first plate 410, move in the front direction (+Y-axis direction) along the left surface of the battery module 10, move in the right direction (+X-axis direction) along the front plate 320 of the battery module 10, and then move in the upward direction (+Z-axis direction). In this way, the venting gas or the like discharged from the battery cell 110 may not be directly vented in the upward direction, but may move along the side surface of the battery module 10 to lose kinetic energy and thermal energy, and then rise in the upper direction of the battery module 10. The venting gas or the like rising in a state of reduced energy is dispersed to the upper end of the battery module 10 and moves and/or is discharged toward the venting valve, so that the heat flow or heat flow rate deviation within the battery pack 1 may be reduced, thereby suppressing and delaying heat propagation.

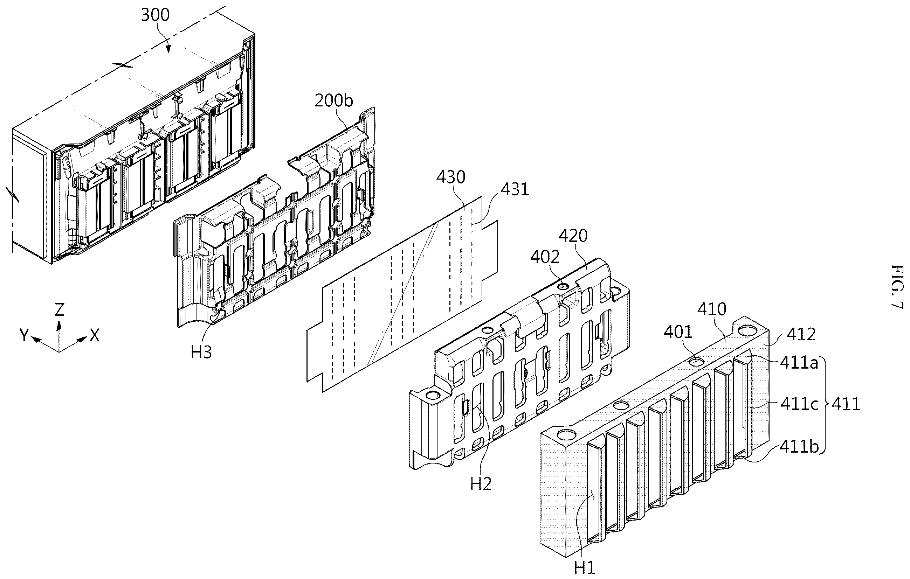

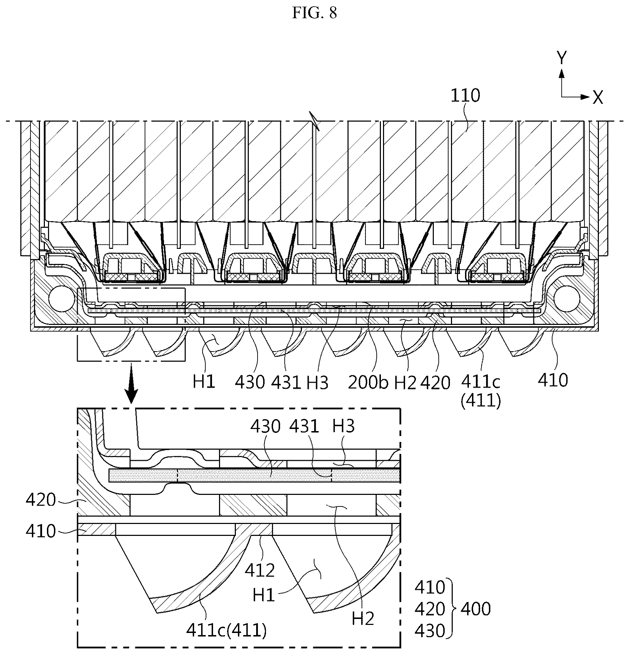

FIG. 7 is an exploded perspective view showing a side cover assembly 400 of a battery module 10 according to an embodiment of the present disclosure. FIG. 8 is a cross-sectional view of the side cover assembly 400 of FIG. 7 according to an embodiment of the present disclosure, taken along the X-axis direction.

Referring to FIGS. 7 and 8, the battery module 10 may include a cell assembly 100 and a module case 300. The module case 300 may include a side cover assembly 400. The configuration of the side cover assembly 400 of FIGS. 7 and 8 may be the same as all or part of the configuration of the side cover assembly 400 of FIGS. 4 to 6. The embodiment of FIGS. 7 and 8 may be partially combined with the embodiment of FIGS. 4 to 6.

According to an embodiment, the side cover assembly 400 may further include a second plate 420 that includes at least one second venting hole H2 formed at a position corresponding to at least one first venting hole H1 and is disposed between the first plate 410 and the cell assembly 100.

The second plate 420 may be disposed on an inner side of the first plate 410. The second plate 420 may be coupled to the first plate 410 by fitting, welding, or coupling means such as screws or rivets. For example, the second plate 420 may include a second groove portion 402 corresponding to the first groove portion 401 formed in the first plate 410, and the first groove portion 401 and the second groove portion 402 may form an integral groove when coupled. The first groove portion 401 and the second groove portion 402 may be configured such that a fixing pin, clip, or the like is inserted into the first groove portion 401 and the second groove portion 402 to be coupled to the case body 310 and/or the top cover 340.

The second plate 420 may be a plate including an insulating material to prevent current or heat from passing through. For example, the second plate 420 may include an insulating material such as plastic.

Similar to the first venting hole H1, at least one second venting hole H2 may be configured to allow venting gas generated in the battery cell 110 to be discharged to the outside of the module case 300. According to an embodiment, at least one second venting hole H2 may be configured to allow venting gas to be discharged in the first direction (e.g., -Y-axis direction). For example, directional venting toward the rear of the battery module 10 may be possible through the second venting hole H2. In this way, similar to the first venting hole H1, at least one second venting hole H2 provided on the rear surface of the module case 300 may be provided to allow gas or flame generated inside the battery module 10 to be discharged to the outside of the battery module 10 in the event of thermal runaway of the battery module 10. The remaining portion of the module case 300 except for at least one second venting hole H2 is closed, and gas may be discharged in a straight line toward the at least one second venting hole H2.

According to the above embodiment of the present disclosure, even if a thermal event occurs at any position of the battery cell 110, gas or flame generated in the battery cell 110 is discharged to the outside of the battery module 10 through a specific second venting hole H2 provided at the rear of the battery cell 110, thereby enabling smooth venting.

At least one second venting hole H2 may be provided in plurality. At least one second venting hole H2 may be disposed in plurality in at least one direction. At least one second venting hole H2 may be disposed along multiple rows. For example, as illustrated in FIG. 7, at least one second venting hole H2 may be disposed in a row along the height direction (Z-axis direction) of the second plate 420, and the at least one second venting hole H2 disposed in a row may be disposed in multiple rows along the stacking direction of the battery cell 110, that is, the width direction (X-axis direction) of the second plate 420. The plurality of second venting holes H2 may be disposed to be spaced apart from each other at regular intervals. The plurality of second venting holes H2 may all guide the venting gas to be discharged in the same first direction (-Y-axis direction).

At least one second venting hole H2 may be disposed and formed to correspond to the first venting hole H1. In other words, the second venting hole H2 may be configured to communicate with the first venting hole H1. The second venting hole H2 may be provided to at least partially face the first venting hole H1. The first venting hole H1 and the second venting hole H2 may be disposed along an approximately straight line. According to the above embodiment of the present disclosure, the venting gas or flame may be discharged to the outside along an approximately straight line by the first venting hole H1 and the second venting hole H2. As a result, the venting gas or flame may be discharged to the outside of the battery module 10 more quickly.

According to an embodiment, the side cover assembly 400 may further include a refractory member 430 disposed on an inner side of the first plate 410. For example, the refractory member 430 may be disposed between the second plate 420 and the rear busbar frame 200b. The refractory member 430 may include a material having excellent fire resistance, heat resistance, or insulation properties. The refractory member 430 may include, for example, a thin refractory sheet or refractory pad. For example, the refractory member 430 may include ceramic fiber.

According to an embodiment, the refractory member 430 may include at least one venting portion 431 formed at a position corresponding to at least one first venting hole H1 (or at least one second venting hole H2). For example, at least one venting portion 431 may have a preliminary fracture part configured to be broken when the venting gas is discharged from the battery cell 110. Accordingly, the refractory member 430 may be configured such that at least one venting portion 431 is closed in a normal state, and at least a part of the at least one venting portion 431 is opened when the venting gas is discharged from the battery cell 110. In other words, at least one venting portion 431 may be configured to allow venting gas to be discharged by pressure, but to block the reverse inflow of oxygen after the venting pressure is reduced. In this way, the refractory member 430 may be disposed on an inner side of the first plate 410 or the second plate 420 to prevent the inflow of venting gas discharged from the adjacent battery cell 110 and to reduce the possibility of reverse inflow of the discharged venting gas. However, the shape of the refractory member 430 or the shape and arrangement of the venting portion 431 are not limited by the embodiment of FIG. 7, and may be designed in various ways. The shape and arrangement of the venting portion 431 will be described in detail below.

According to an embodiment, the busbar frame 200b may be disposed between the side cover assembly 400 and a plurality of battery cells 110. According to an embodiment, the busbar frame 200b may further include at least one third venting hole H3. The at least one third venting hole H3 may be configured to allow venting gas generated in the battery cell 110 to be discharged to the outside of the module case 300. As a result, directional venting in one direction may be possible in the battery module 10 according to an embodiment of the present disclosure.

According to an embodiment, at least one third venting hole H3 may be configured to allow venting gas to be discharged in the first direction (e.g., -Y-axis direction). For example, directional venting toward the rear of the battery module 10 may be possible through the third venting hole H3. In this way, similar to the first venting hole H1 and the second venting hole H2, at least one third venting hole H3 provided on the rear surface of the module case 300 may be provided to allow gas or flame generated inside the battery module 10 to be discharged to the outside of the battery module 10 in the event of thermal runaway of the battery module 10. The remaining portion of the module case 300 except for at least one third venting hole H3 is closed, and gas may be discharged in a straight line toward the at least one third venting hole H3. Specifically, referring to FIG. 3, the front busbar frame 200a does not include a venting hole, and only the rear busbar frame 200b includes at least one third venting hole H3, thereby inducing directional venting toward the rear.

At least one third venting hole H3 may be provided in plurality. At least one third venting hole H3 may be disposed in plurality in at least one direction. At least one third venting hole H3 may be disposed along multiple rows. For example, as illustrated in FIG. 7, at least one third venting hole H3 may be disposed in a row along the height direction (Z-axis direction), and the at least one third venting hole H3 disposed in a row may be disposed in multiple rows along the stacking direction of the battery cell 110, that is, the width direction (X-axis direction) of the busbar frame 200b. The plurality of third venting holes H3 may be disposed to be spaced apart from each other at regular intervals. The plurality of third venting holes H3 may all guide the venting gas to be discharged in the same first direction (-Y-axis direction).

At least one third venting hole H3 may be disposed and formed to correspond to the first venting hole H1 and/or the second venting hole H2. In other words, the third venting hole H3 may be configured to communicate with the first venting hole H1 and/or the second venting hole H2. The third venting hole H3 may be provided to at least partially face the second venting hole H2. The third venting hole H3, the second venting hole H2, and the first venting hole H1 may be disposed along an approximately straight line. According to the above embodiment of the present disclosure, the venting gas or flame may be discharged to the outside along an approximately straight line by the third venting hole H3, the second venting hole H2, and the first venting hole H1. As a result, the venting gas or flame may be discharged to the outside of the battery module 10 more quickly.

FIG. 9 is a cross-sectional view of a side cover assembly 400 according to an embodiment of the present disclosure, taken along the X-axis direction.

Referring to FIG. 9, the battery module 10 may include a cell assembly 100 and a module case 300. The module case 300 may include a side cover assembly 400. The configuration of the side cover assembly 400 of FIG. 9 may be the same as all or part of the configuration of the side cover assembly 400 of FIGS. 7 and 8. The embodiment of FIG. 9 may be partially combined with the embodiments of FIGS. 7 and 8.

Unlike FIGS. 7 and 8, at least one second protrusion 421 may be formed on the second plate 420 disposed on the inner side. According to an embodiment, the second plate 420 may further include at least one second protrusion 421 that extends outward from the second surface 422 facing the first direction (-Y-axis direction), which is the outer direction of the second plate 420. The number and position of at least one second protrusion 421 may correspond to the number and position of at least one second venting hole H2. For example, at least one second protrusion 421 may be integrally formed with the second plate 420. For example, the second plate 420 may be integrally injection-molded to fit the shape of the second protrusion 421.

According to an embodiment, at least one second protrusion 421 may be formed to surround at least a part of at least one second venting hole H2. According to an embodiment, at least one second protrusion 421 may include a curved surface 421c bent in a second direction perpendicular to the first direction. Specifically, at least one second protrusion 421 may include a first protrusion surface 421a extending in an upper direction of the second venting hole H2, a second protrusion surface 421b extending in a lower direction of the second venting hole H2, and a curve surface 421c that vertically contacts the first protrusion surface 421a and the second protrusion surface 421b and is bent in the second direction. For example, the second direction may be a direction roughly parallel to the second surface 422 of the second plate 420. For example, the second direction may be a left direction or a right direction (X-axis direction) that is roughly perpendicular to the first direction. For example, referring to FIG. 9, the second direction may be roughly the left direction (-X-axis direction).

At least one second protrusion 421 formed on the second plate 420 may be configured to penetrate at least one first venting hole H1 of the first plate 410. Accordingly, the second protrusion 421 may be exposed to the outside of the battery module 10 and may form a part of the exterior of the battery module 10. The first plate 410 and the second plate 420 may be fixed through a fit coupling or the like by allowing the at least one second protrusion 421 to penetrate the at least one first venting hole H1.

Meanwhile, other features of the at least one second protrusion 421 may be substantially the same as those of the at least one first protrusion 411 shown in FIGS. 7 and 8.

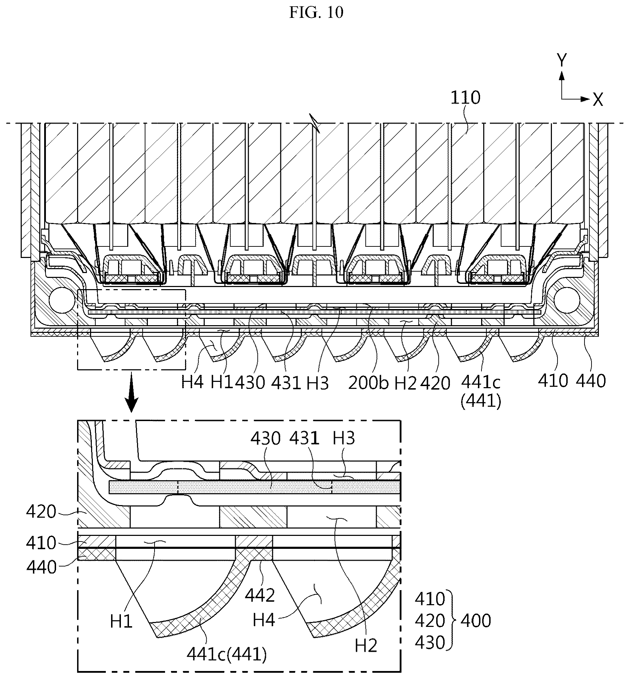

FIG. 10 is a cross-sectional view of a side cover assembly 400 according to an embodiment of the present disclosure, taken along the X-axis direction.

Referring to FIG. 10, the battery module 10 may include a cell assembly 100 and a module case 300. The module case 300 may include a side cover assembly 400. The configuration of the side cover assembly 400 of FIG. 10 may be the same as all or part of the configuration of the side cover assembly 400 of FIG. 9. The embodiment of FIG. 10 may be partially combined with the embodiment of FIG. 9.

According to an embodiment, the side cover assembly 400 may further include a third plate 440 disposed on an outer side of the first plate 410. For example, the third plate 440 may be attached onto the first surface 412 of the first plate 410.

The third plate 440 may include a material having electrical insulation and heat resistance. For example, the third plate 440 may include mica. For example, the third plate 440 may include hard mica.

The third plate 440 may include at least one fourth venting hole H4 formed at a position corresponding to at least one first venting hole H1. The at least one fourth venting hole H4 may be configured to allow venting gas generated in the battery cell 110 to be discharged to the outside of the module case 300. As a result, directional venting in one direction may be possible in the battery module 10 according to an embodiment of the present disclosure.

The at least one fourth venting hole H4 may be configured to allow venting gas to be discharged in the first direction (e.g., -Y-axis direction). For example, directional venting toward the rear of the battery module 10 may be possible through the fourth venting hole H4. In this way, similar to the first venting hole H1, at least one fourth venting hole H4 provided on the rear surface of the module case 300 may be provided to allow gas or flame generated inside the battery module 10 to be discharged to the outside of the battery module 10 in the event of thermal runaway of the battery module 10. The remaining portion of the module case 300 except for at least one fourth venting hole H4 is closed, and gas may be discharged in a straight line toward the at least one fourth venting hole H4.

According to the above embodiment of the present disclosure, even if a thermal event occurs at any position of the battery cell 110, gas or flame generated in the battery cell 110 is discharged to the outside of the battery module 10 through a specific fourth venting hole H4 provided at the rear of the battery cell 110, thereby enabling smooth venting.

At least one fourth venting hole H4 may be provided in plurality. At least one fourth venting hole H4 may be disposed in plurality in at least one direction. At least one fourth venting hole H4 may be disposed along multiple rows. For example, as illustrated in FIG. 10, at least one fourth venting hole H4 may be disposed in a row along the height direction (Z-axis direction) of the third plate 440, and the at least one fourth venting hole H4 disposed in a row may be disposed in multiple rows along the stacking direction of the battery cell 110, that is, the width direction (X-axis direction) of the third plate 440. The plurality of fourth venting holes H4 may be disposed to be spaced apart from each other at regular intervals. The plurality of fourth venting holes H4 may all guide the venting gas to be discharged in the same first direction (-Y-axis direction).

At least one fourth venting hole H4 may be disposed and formed to correspond to the first venting hole H1. In other words, the fourth venting hole H4 may be configured to communicate with the first venting hole H1. The fourth venting hole H4 may be provided to at least partially face the first venting hole H1. The first venting hole H1 and the fourth venting hole H4 may be disposed along an approximately straight line. According to the above embodiment of the present disclosure, the venting gas or flame may be discharged to the outside along an approximately straight line by the first venting hole H1 and the fourth venting hole H4. As a result, the venting gas or flame may be discharged to the outside of the battery module 10 more quickly.

The third plate 440 may further include at least one third protrusion 441 that extends outward from the third surface 442 facing the first direction (-Y-axis direction), which is the outer direction of the third plate 440. The number and position of at least one third protrusion 441 may correspond to the number and position of at least one fourth venting hole H4. For example, at least one third protrusion 441 may be integrally formed with the third plate 440. For example, the third plate 440 may be injection-molded to fit the shape of the third protrusion 441.

According to an embodiment, at least one third protrusion 441 may be formed to surround at least a part of at least one fourth venting hole H4. According to an embodiment, at least one third protrusion 441 may include a curved surface 441c bent in a second direction roughly perpendicular to the first direction. Specifically, at least one third protrusion 441 may include a first protrusion surface 441a extending in an upper direction of the fourth venting hole H4, a second protrusion surface 441b extending in a lower direction of the fourth venting hole H4, and a curve surface 441c that vertically contacts the first protrusion surface 441a and the second protrusion surface 441b and is bent in the second direction. For example, the second direction may be a direction roughly parallel to the third surface 442 of the third plate 440. For example, the second direction may be a left direction or a right direction (X-axis direction) that is roughly perpendicular to the first direction. For example, referring to FIG. 10, the second direction may be roughly the left direction (-X-axis direction).

Meanwhile, other features of the at least one third protrusion 441 may be substantially the same as those of the at least one first protrusion 411 shown in FIGS. 7 and 8.

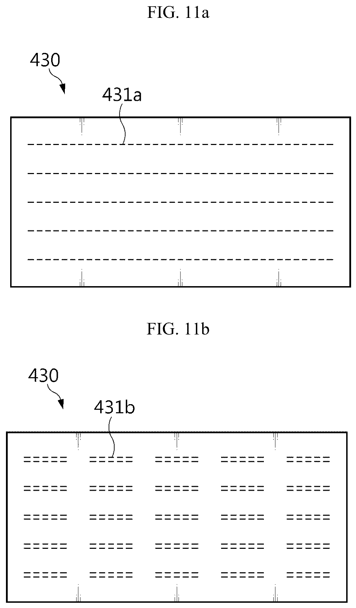

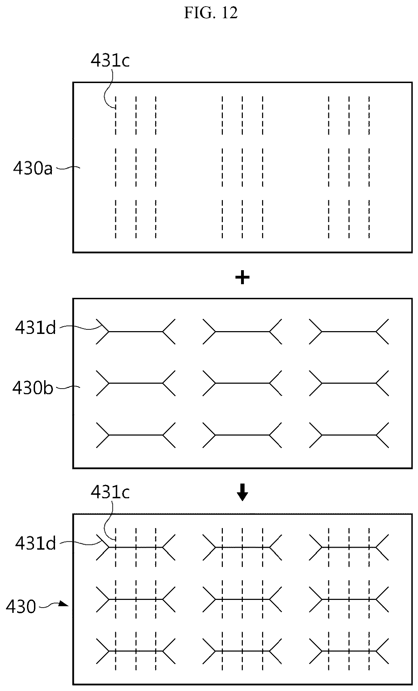

FIGS. 11a and 11b are views showing a refractory member 430 including at least one venting portion 431 according to an embodiment of the present disclosure. FIG. 12 is a view showing a refractory member 430 including at least one venting portion 431 according to an embodiment of the present disclosure.

Referring to FIGS. 11a to 12, the battery module 10 may include a cell assembly 100 and a module case 300. The module case 300 may include a side cover assembly 400. The configuration of the side cover assembly 400 of FIGS. 11a to 12 may be the same as all or part of the configuration of the side cover assembly 400 of FIG. 10. The embodiment of FIGS. 11a to 12 may be partially combined with the embodiment of FIG. 10.

According to an embodiment, at least one venting portion 431 may include a preliminary fracture part configured to be broken when the venting gas is discharged from the battery cell 110. Accordingly, the refractory member 430 may be configured such that at least one venting portion 431 is closed in a normal state, and at least a part of the at least one venting portion 431 is opened when the venting gas is discharged from the battery cell 110. In other words, at least one venting portion 431 may be configured to allow venting gas to be discharged by pressure, but to block the reverse inflow of oxygen after the venting pressure is reduced. In this way, the refractory member 430 may be disposed on an inner side of the first plate 410 or the second plate 420 to prevent the inflow of venting gas discharged from the adjacent battery cell 110 and to reduce the possibility of reverse inflow of the discharged venting gas.

For example, a preliminary fracture part may be formed according to the shape of the venting portion 431. The preliminary fracture part may be configured to be thinner or less dense than the surrounding area of the refractory member 430 to be more easily broken than the surrounding area. The refractory member 430 may be provided with grooves, dotted lines, or solid lines according to the shape of the preliminary fracture part. The preliminary fracture part may be provided weaker than the adjacent area to be easily broken by the venting pressure.

At least a part of the venting portion 431 may be formed at a position corresponding to the venting hole (e.g., the first venting hole H1, the second venting hole H2, and the third venting hole H3), and the arrangement method may be designed in various ways.

Referring to FIG. 11a, the venting portion 431a may have a plurality of preliminary fracture parts arranged in the length direction (X-axis direction) and spaced apart from each other. The plurality of preliminary fracture parts aligned in the length direction (X-axis direction) may be provided in plurality in the vertical direction.

Referring to FIG. 11b, the venting portion 431b may have a plurality of preliminary fracture parts arranged in the length direction (X-axis direction) and disposed in two vertical stages. The plurality of preliminary fracture parts disposed in two stages may be aligned in the length direction (X-axis direction) and the height direction (Z-axis direction).

Referring to FIG. 12, the refractory member 430 may be composed of not only a single sheet but also a double sheet. For example, the refractory member 430 may include a first refractory member 430a and a second refractory member 430b that are overlappingly disposed. At this time, the shapes of the preliminary fracture parts of the first refractory member 430a and the second refractory member 430b may be different from each other. For example, the venting portion 431c of the first refractory member 430a may have a plurality of cutting grooves arranged in the vertical direction (Z-axis direction). The plurality of cutting grooves aligned in the vertical direction (Z-axis direction) may be provided in plurality in the length direction. For example, the venting portion 431d of the second refractory member 430b may include a preliminary fracture part including a single line formed to extend in the length direction and diagonal lines branching off from both ends of the single line. The preliminary fracture parts may be provided in plurality aligned in the length direction and the vertical direction.

Therefore, the shape and arrangement of the preliminary fracture part of the refractory member 430 may be designed and changed in variously ways, and when a thermal event occurs in the battery cell 110, the preliminary fracture part adjacent to the occurrence location is broken to allow the venting gas to be discharged, and the remaining preliminary fracture parts are not broken to prevent the venting gas from flowing inward.

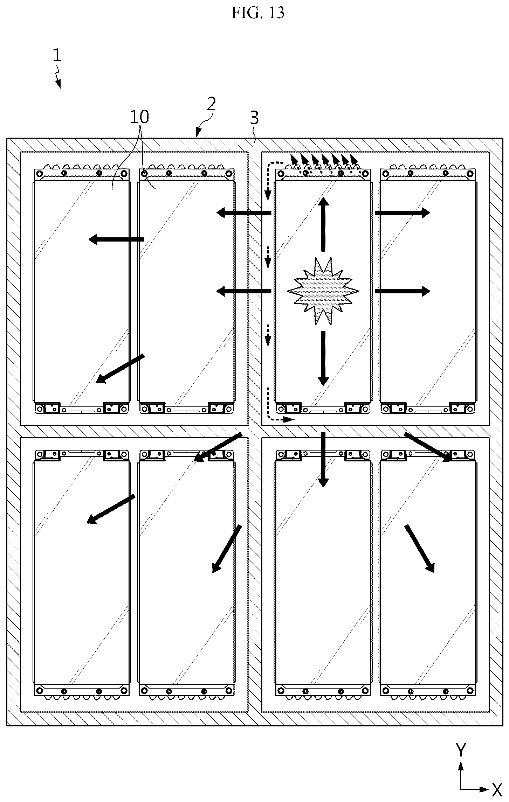

FIG. 13 is a view for describing a venting gas discharge path during a thermal event of a battery module 10 in a battery pack including the battery module 10 according to an embodiment of the present disclosure.

Referring to FIG. 13, a battery pack 1 according to an embodiment of the present disclosure may include one or more battery modules 10 according to an embodiment of the present disclosure as described above. The battery pack 1 according to the present disclosure may further include a battery management system (BMS) for integrated control of charging and discharging of one or more battery modules, a current sensor, a fuse, and the like, and a pack case 2 for accommodating the above-described components, and a cross beam 3 for aligning the battery modules 10 within the pack case 2.

Referring to FIG. 13, a plurality of battery modules 10 may be disposed such that the rear surface of the battery module 10 provided with venting holes (e.g., the first venting hole H1, the second venting hole H2, the third venting hole H3, or the like) faces the outside of the pack case 2. In this way, by disposing the venting holes toward the outside of the pack case 2, heat transfer to the adjacent battery module 10 may be minimized, and the venting gas may be induced to be quickly discharged to the outside of the battery pack.

According to the above embodiment of the present disclosure, when a thermal event occurs in the battery cell 110 within the battery module 10, the venting gas or flame may be directionally vented toward the rear side of the battery module 10 while passing through the venting holes (e.g., the first venting hole H1, the second venting hole H2, the third venting hole H3, or the like). Accordingly, the venting gas or flame discharged to the rear side may be quickly discharged to the outside of the battery pack 1.

Additionally, according to the above embodiment of the present disclosure, the venting gas or flame is discharged to the rear of the battery module 10, and may collide with the curved surface 411c of the protrusion (e.g., the first protrusion 411, the second protrusion 421, or the third protrusion 441) to be bent in a roughly perpendicular direction and move. For example, it may be vented in a direction roughly parallel to one surface of the side cover assembly 400. Additionally, it may be configured to curvedly move along the side surface of the battery module 10 and then rise. That is, the venting gas or the like may be configured to move along the space between the battery modules 10 or the space between the battery module 10 and the cross beam 3. In this way, the venting gas or the like may move along the side surface of the battery module 10 to lose kinetic energy and thermal energy, and then rise in the upper direction of the battery module 10. The venting gas or the like rising in a state of reduced energy is dispersed to the upper end of the battery module 10 and moves and/or is discharged toward the venting valve, so that the heat flow or heat flow rate deviation within the battery pack may be reduced, thereby suppressing and delaying heat propagation. Accordingly, it is possible to prevent or delay events, such as fires or explosions, caused by thermal runaway of the battery pack 1 including multiple battery modules 10.

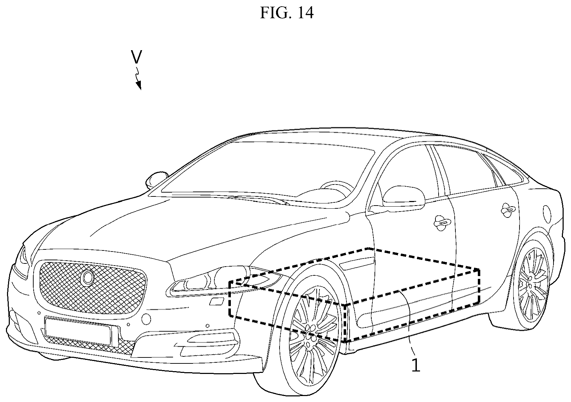

FIG. 14 is a schematic perspective view of a vehicle including a battery pack 1 according to an embodiment of the present disclosure.

Referring to FIG. 14, a vehicle V according to an embodiment of the present disclosure may include one or more battery packs 1 according to an embodiment of the present disclosure. The vehicle V according to the present disclosure may be, for example, an electric vehicle, a hybrid vehicle, or a plug-in hybrid vehicle. The vehicle V includes a four-wheeled vehicle and a two-wheeled vehicle. The vehicle V operates by receiving power from the battery pack 1 according to an embodiment of the present disclosure.

The present disclosure has been described hereinabove with reference to a limited number of embodiments and drawings, but the present disclosure is not limited thereto and it is obvious that a variety of modifications and variations may be made thereto by those having ordinary skill in the art within the technical aspect of the present disclosure and the scope of the appended claims and their equivalents.

## Claims

1. A battery module comprising:
a cell assembly comprising a plurality of battery cells; and
a module case that accommodates the cell assembly and comprises a side cover assembly covering one side surface of the cell assembly,
wherein the side cover assembly comprises a first plate comprising at least one first venting hole configured to discharge venting gas, and
the venting gas is discharged in a first direction perpendicular to the first plate and is configured to be bent in a second direction roughly parallel to the first plate and move.

2. The battery module according to claim 1,
wherein the first plate further comprises at least one first protrusion extending in an outward direction from a first surface of the first plate facing the first direction.

3. The battery module according to claim 2,
wherein the at least one first protrusion is formed to surround at least a part of the at least one first venting hole, and
the at least one first protrusion comprises at least one curved surface bent in the second direction.

4. The battery module according to claim 1,
wherein the at least one first venting hole is disposed in plurality along the stacking direction of the battery cells.

5. The battery module according to claim 3,
wherein the curved surface is configured to discharge the venting gas in the second direction.

6. The battery module according to claim 1,
wherein the side cover assembly further comprises a refractory member disposed on an inner side of the first plate.

7. The battery module according to claim 6,
wherein the refractory member comprises at least one venting portion in which at least a part thereof is formed at a position corresponding to the first venting hole.

8. The battery module according to claim 7,
wherein the refractory member is configured such that the at least one venting portion is closed in a normal state, and at least a part of the at least one venting portion is opened when the venting gas is discharged from the battery cell.

9. The battery module according to claim 7,
wherein the at least one venting portion has a preliminary fracture part configured to be broken when the venting gas is discharged from the battery cell.

10. The battery module according to claim 1,
wherein the side cover assembly further comprises:
a second plate that comprises at least one second venting hole formed at a position corresponding to the at least one first venting hole and is disposed between the first plate and the cell assembly.

11. The battery module according to claim 10,
wherein the second plate further comprises at least one second protrusion extending in an outward direction from a second surface of the second plate facing the first direction.

12. The battery module according to claim 10,
wherein the side cover assembly further comprises:
a third plate that is disposed on an outer side of the first plate and comprises at least one fourth venting hole formed at a position corresponding to the at least one first venting hole.

13. The battery module according to claim 12,
wherein the third plate further comprises at least one third protrusion extending in an outward direction from a third surface of the third plate facing the first direction.

14. The battery module according to claim 1, further comprising:
a busbar frame disposed between the side cover assembly and the plurality of battery cells.

15. The battery module according to claim 14,
wherein the busbar frame comprises at least one third venting hole formed at a position corresponding to the at least one first venting hole.

16. A battery pack comprising a battery module according to claims 1 to 15.

17. A vehicle comprising a battery pack according to claim 16.
